# EUROPEAN PATENT APPLICATION

(11) **EP 4 621 870 A1**
(43) Date of publication of application: **24.09.2025**
(21) Application number: 23891447.7
(22) Date of filing: 08.11.2023
(51) Int. Cl.: H01M 4/139, B01F 23/50, B01F 35/213, B01F 35/221

(54) **DISPERSING DEVICE AND DISPERSING METHOD**

(30) Priority: 18.11.2022 JP 2022185294
(71) Applicant: Nihon Spindle Manufacturing Co., Ltd., Amagasaki-shi, Hyogo 661-8510 (JP)
(72) Inventor: ONISHI, Keiichiro, Amagasaki-shi, Hyogo 661-8510 (JP)
(74) Representative: Louis Pöhlau Lohrentz
(86) International application number: PCT/JP2023/040313
(87) International publication number: WO 2024/106295

(57) **Abstract**

An object of the present invention is to provide a dispersion apparatus and a dispersion method in which it is possible to always optimize a powder supply amount in mixing of powder and a liquid.

In order to achieve the above object, there are provided the dispersion apparatus including: a stirring and mixing section that mixes the powder and the liquid; means for identifying a powder supply status to the stirring and mixing section; and a control unit that controls supply of the powder according to the powder supply status, and the dispersion method using the dispersion apparatus.

According to the present invention, since the supply of the powder can be controlled according to the powder supply status, it is possible to avoid the influence of a preparation-related failure in the mixing of the powder and the liquid in advance and to always optimize the powder supply amount. In addition, the uniformity of the mixture of the powder and the liquid can be secured, and the quality can be maintained and improved.

## Description

### Technical Field

The present invention relates to a dispersion apparatus and a dispersion method. More specifically, the present invention relates to a dispersion apparatus and a dispersion method for solving a problem such as poor dispersion that may occur when slurry, which is a mixture of powder and a liquid, is prepared in large quantities.

### Background Art

A dispersion apparatus that mixes powder and a liquid to prepare slurry which is a mixture of the powder and the liquid is used in various manufacturing in a wide range of fields such as lithium ion battery electrode materials, coating materials, nano-fiber dispersion composite materials, cosmetics such as emulsions, pharmaceuticals such as ointments, and foods.

In the mixing of the powder and the liquid, in addition to various types of mixers such as a planetary mixer and a biaxial kneader, a dispersion apparatus that performs mixing while transferring the powder and the liquid is known. For example, PTL 1 discloses a powder mixing pump that efficiently and effectively performs suction of powder and feed of a liquid, and further mixing of the powder and the liquid in one pump.

### Citation List

### Patent Literature

[PTL 1] Japanese Unexamined Patent Publication No. 2006-281017

### Summary of Invention

### Technical Problem

As described in PTL 1, it is known to efficiently and effectively perform mixing of powder and a liquid by using a dispersion apparatus and a dispersion method involving suction of the powder and feed of the liquid. On the other hand, according to the knowledge of the inventor of the present invention, it has been found that when powder and a liquid are mixed to mass-produce slurry, it is difficult to quantitatively supply the powder due to a preparation-related failure such as excessive viscosity or poor dispersion, and in addition, that the uniformity and quality of the mixture after the stirring and mixing are affected, so that appropriate measures are required. In particular, in mass-producing high concentration, high viscosity, and difficult-to-disperse slurry, there is a problem in that the influence of occurrence of the preparation-related failure described above is large.

Therefore, an object of the present invention is to provide a dispersion apparatus and a dispersion method in which it is possible to always optimize a powder supply amount in mixing of powder and a liquid.

### Solution to Problem

The inventor of the present invention has made intensive studies on the above problem, and as a result, has found that in the mixing of powder and a liquid, by identifying a powder supply status and controlling the supply of the powder, based on the powder supply status, it is possible to always optimize a powder supply amount, and has completed the present invention.

That is, the present invention is the following dispersion apparatus and dispersion method.

A dispersion apparatus of the present invention for solving the above problem includes: a stirring and mixing section that mixes powder and a liquid; means for identifying a powder supply status to the stirring and mixing section; and a control unit that controls supply of the powder according to the powder supply status.

According to this feature, since the supply of the powder can be controlled according to the powder supply status, it is possible to avoid the influence of the preparation-related failure such as excessive viscosity or poor dispersion in the mixing of the powder and the liquid in advance, and to always optimize the powder supply amount. In addition, the uniformity of the mixture of the powder and the liquid can be secured, and the quality can be maintained and improved.

In addition, as an embodiment of the dispersion apparatus of the present invention, the control unit performs an operation related to the mixing of the powder and the liquid until the supply is resumed, in addition to operations for supply, stop, and supply resumption of the powder.

According to this feature, by controlling the mixing of the powder and the liquid in addition to the control of the supply of the powder, it is possible to normalize an operation related to the preparation of the mixture while the supply of the powder is stopped. In this way, the supply of the powder can be continued in a state where the influence of the occurrence of the preparation-related failure is more accurately avoided or eliminated, and the powder supply amount can be always optimized with higher accuracy.

In addition, as an embodiment of the dispersion apparatus of the present invention, the inside of the stirring and mixing section is at a negative pressure.

According to this feature, the inside of the stirring and mixing section is in a negative pressure state, so that when the powder is supplied to the stirring and mixing section, the powder can be quickly moved to the stirring and mixing section side. In this way, the mixing of the powder and the liquid can be efficiently and effectively performed to be in a good dispersion state.

In addition, a dispersion method of the present invention for solving the above problem includes: a stirring and mixing process of mixing powder and a liquid; a process of identifying a powder supply status in the stirring and mixing process; and a control process of controlling supply of the powder according to the powder supply status.

According to this feature, since the supply of the powder can be controlled according to the powder supply status, it is possible to avoid the influence of the preparation-related failure such as excessive viscosity or poor dispersion in the mixing of the powder and the liquid in advance, and to always optimize the powder supply amount. In addition, the uniformity of the mixture of the powder and the liquid can be secured, and the quality can be maintained and improved.

### Advantageous Effects of Invention

According to the present invention, it is possible to provide a dispersion apparatus and a dispersion method in which it is possible to always optimize a powder supply amount in mixing of powder and a liquid.

### Brief Description of Drawings

Fig. 1 is a schematic explanatory diagram of a dispersion apparatus according to an embodiment of the present invention.
Fig. 2 is a diagram showing an example of a control flow of a control unit in the dispersion apparatus according to the embodiment of the present invention.

### Description of Embodiments

Hereinafter, an embodiment of a dispersion apparatus and a dispersion method according to the present invention will be described in detail with reference to the drawings. The dispersion method in the present invention is replaced with a description of an operation of the dispersion apparatus in the present invention.

The dispersion apparatus and the dispersion method which are described in the embodiment are merely examples for describing the dispersion apparatus and the dispersion method according to the present invention, and the present invention is not limited thereto.

The dispersion apparatus in the present invention may be an apparatus that performs mixing of powder and a liquid, and the treatment content related to the mixing may be either dissolution or suspension of the powder in the liquid. Therefore, a mixture that is obtained by the dispersion apparatus in the present invention is in the form of a liquid or slurry.

In addition, the dispersion apparatus of the present invention can be widely applied in an industrial field in which the mixing of powder and a liquid is utilized. As an example of such a field, for example, a member preparation of an industrial product of a nano-material dispersion material, a cosmetic preparation such as an emulsion, a pharmaceutical product such as an ointment, a food product, or the like can be given. In particular, a powder and liquid combination that is likely to cause the preparation-related failure such as poor dispersion at the time of mass production is often handled, and thus the powder and liquid combination can be suitably used for manufacturing various products.

As the powder in the present invention, active materials (positive electrode active material and negative electrode active material) or solid electrolytes known as electrode materials for a secondary battery, a binder, or the like can be given. In addition, inorganic powder such as carbon black, carbon nanotube, graphene, mica, talc, alumina, silica, zeolite, and ceramic, powder or the like of metal or a metal oxide, cellulose nanofiber, powder of various organic compounds for use in medicine, cosmetics, food, and the like, or the like can be given. In addition, a single type of powder raw material may be used, or a plurality of types of powder raw materials may be used.

The liquid in the present invention is not particularly limited as long as the liquid is mixed with the above-described powder to form a mixture. For example, as the liquid, in addition to water and water-based solvents, non-water-based solvents (inorganic solvents and organic solvents) or the like can be given. The type of the liquid can be appropriately selected in consideration of the combination with the powder according to the function and properties required as a final mixture. As the organic solvent, organic solvents such as methanol, ethanol, hexane, toluene, benzene, DMSO, and DMF, oil components such as paraffin oil, or the like can be given, and as the inorganic solvent, silicone oil or the like can be given. In addition, a single type of liquid may be used, or a plurality of types of liquids may be mixed and used.

### [Dispersion Apparatus]

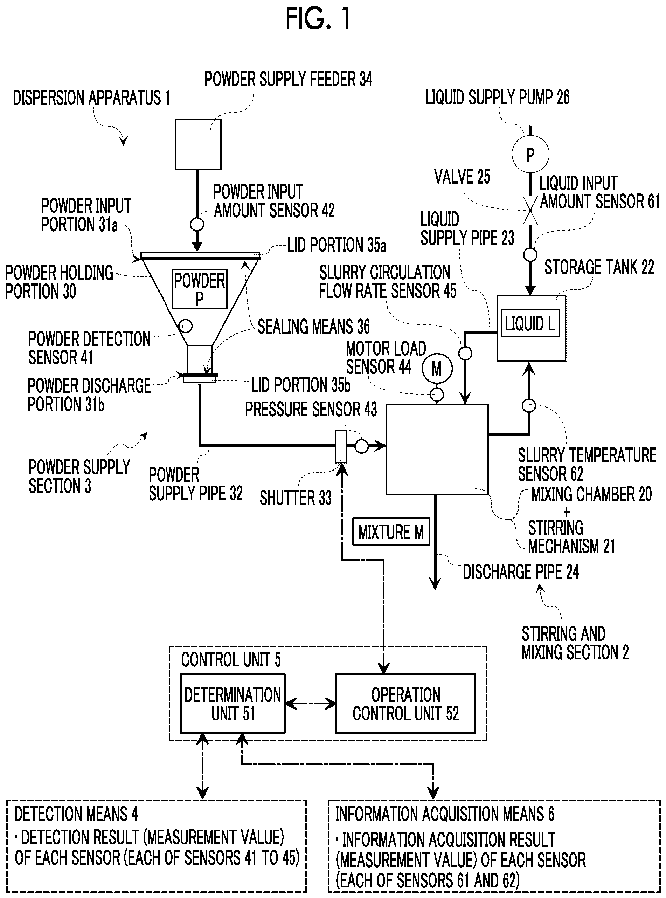

Fig. 1 is a schematic explanatory diagram showing a structure of the dispersion apparatus according to an embodiment of the present invention.

As shown in Fig. 1, a dispersion apparatus 1 includes a stirring and mixing section 2 and a powder supply section 3. In addition, the dispersion apparatus 1 includes detection means 4 for identifying a powder supply status to the stirring and mixing section 2, and a control unit 5 that controls the powder supply.

The dispersion apparatus 1 shown in Fig. 1 shows an example of the dispersion apparatus 1 in the present embodiment, and is not limited to the configuration shown in Fig. 1. In addition, in Fig. 1, an arrow indicated by a one-dot chain line indicates that components are connected to be capable of being controlled or input. However, a part thereof is not shown.

As shown in Fig. 1, the dispersion apparatus 1 of the present embodiment supplies powder P from the powder supply section 3 in which the powder P is stored to the stirring and mixing section 2 in which the mixing of the powder P and a liquid L is performed to obtain a mixture M.

### <Stirring and Mixing Section>

The stirring and mixing section 2 is for preparing the mixture M by performing the mixing treatment of the powder P with the liquid L. In addition, the stirring and mixing section 2 in the present embodiment refers to a location where the treatment of obtaining the mixture M by mixing the powder P and the liquid L is performed, and the treatment content thereof includes the dissolution or dispersion of the powder P with respect to the liquid L.

As the stirring and mixing section 2, for example, any structure may be adopted as long as it can perform the stirring and mixing in a space provided with a stirring mechanism, and a specific structure thereof is not particularly limited. As an example of the structure of the stirring and mixing section 2, for example, as shown in Fig. 1, a structure including a mixing chamber 20, a stirring mechanism 21, a storage tank 22 that stores the liquid L, a liquid supply pipe 23 for supplying the liquid L to the mixing chamber 20, and a discharge pipe 24 for discharging the mixture M obtained by stirring and mixing in the mixing chamber 20 to the outside of the mixing chamber 20 can be given. In this case, the stirring and mixing section 3 may include a circulation pipe (not shown) for circulating the mixed slurry to a liquid storage tank.

The mixing chamber 20 may be any chamber that forms a space for performing the stirring and mixing of the powder P and the liquid L, and a specific structure thereof is not particularly limited. The mixing chamber 20 may be formed by a single space or may be partitioned to have a plurality of spaces.

The stirring mechanism 21 is for stirring and mixing the powder P and the liquid L supplied into the mixing chamber 20 and is provided in the mixing chamber 20.

As an example of the stirring mechanism 21, a stirring mechanism having a configuration performing stirring and mixing by using a uniaxial stirring blade or a structure such as a blade, a stirring mechanism having a configuration performing dispersion by ultrasonic waves, a stirring mechanism having a configuration performing dispersion by a shearing force by using a planetary mixer, a biaxial kneader, or the like, a stirring mechanism having a configuration performing dispersion by cavitation and a shearing force, or the like can be given. In addition, from the viewpoint that due to the contraction/expansion of cavitation bubbles, agglomerated particles are efficiently dispersed and excessive pulverization of powder is unlikely to occur, it is more preferable to use a stirring mechanism having a configuration performing dispersion by cavitation and a shearing force. As the configuration performing dispersion by cavitation and a shearing force, for example, an already commercially available known configuration such as Jet Paceter (registered trademark) made by Nihon Spindle Manufacturing Co., Ltd., or the like can be given.

In addition, as the stirring and mixing section 2, it is preferable to use a stirring and mixing section in which the inside of the stirring and mixing section 2 is at a negative pressure. In this way, since the powder P that is supplied from the powder supply section 3 (described later) is quickly introduced into the stirring and mixing section 2, it is possible to efficiently and effectively perform the mixing of the powder P and the liquid L, and it is possible to obtain a good dispersion state.

As the configuration in which the inside of the stirring and mixing section 2 is at a negative pressure, for example, a stirring and mixing section having a configuration capable of reducing the pressure inside the mixing chamber 20 can be given. As an example of such a configuration, a configuration in which a pressure-reducing mechanism is directly provided in the mixing chamber 20, a configuration forming a negative pressure state in the mixing chamber 20 by circulating and supplying the liquid L to the mixing chamber 20, or the like can be given. In addition, since among the above-described stirring mechanisms 21, the stirring mechanism performing dispersion by cavitation and a shearing force includes a configuration making the pressure in the mixing chamber 20 negative as a configuration for generating cavitation, the stirring mechanism can be suitably used as the stirring and mixing section 2 in the present embodiment.

The storage tank 22 stores the liquid L to be supplied into the mixing chamber 20. The storage tank 22 may have any structure as long as the liquid L can be stored, and a specific structure is not particularly limited. For example, as shown in Fig. 1, a configuration in which a valve 25 and a liquid supply pump 26 are provided in order to control the amount of liquid L supplied to the storage tank 22 in the present embodiment can be given.

In addition, the liquid supply pipe 23 may have any structure as long as it can connect the storage tank 22 and the mixing chamber 20 to each other and supply the liquid L, and a specific structure is not particularly limited.

In addition, the liquid supply pipe 23 may be connected such that the liquid L can circulate between the mixing chamber 20 and the storage tank 22. In particular, in a case where a configuration generating cavitation is used as the stirring mechanism 21, it is preferable to include a circulation pipe for circulating the slurry of the mixture M after the start of the mixing treatment of the powder P and the liquid L in the stirring and mixing section 2. In this way, it is possible to obtain the effect that, in the preparation of the mixture M, the work efficiency can be improved and the quality of the mixture M can be improved. Further, in a case where the tendency of the occurrence of the preparation-related failure is detected by the detection means 4 (described later), the powder supply is temporarily stopped, and the viscosity of the mixture M in the mixing chamber 20 can be lowered by circulating the liquid L.

The mixture M prepared in the mixing chamber 20 is discharged to the outside of a system via the discharge pipe 24. As shown in Fig. 1, the discharge pipe 24 is provided independently. However, in a case where the liquid supply pipe 23 is connected in a circulatory manner, a part of the liquid supply pipe 23 may be branched. In addition, the mixture M discharged to the outside of the system may be directly transferred to an implementation location or a use point for the next process, or may be stored in a storage tank or the like for storing the mixture M.

### <Powder Supply Section>

The powder supply section 3 stores the powder P and inputs the powder P into the stirring and mixing section 2.

The structure of the powder supply section 3 may be any structure as long as it has a configuration capable of storing and sealing the powder P, and a specific structure is not particularly limited.

As an example of the powder supply section 3, as shown in Fig. 1, the powder supply section 3 includes a powder holding portion 30 that holds the powder P, a powder input portion 31a that inputs the powder P, a powder discharge portion 31b for discharging the powder P, and a powder supply pipe 32 for supplying the discharged powder P to the stirring and mixing section 2. In addition, a shutter 33 is provided on the powder supply pipe 32, and the supply of the powder P to the stirring and mixing section 2 is controlled by opening and closing the shutter 33.

When the shutter 33 is opened, the powder P in the powder supply section 3 is quickly introduced into the mixing chamber 20 of the stirring and mixing section 2 via the powder supply pipe 32. In this way, the powder P and the liquid L are stirred and mixed in the mixing chamber 20 to prepare the mixture M.

The powder holding portion 30 may have any shape and material capable of storing the powder P and is not particularly limited. As the shape of the powder holding portion 30, for example, in addition to a cylindrical shape or a rectangular parallelepiped shape, an inverted cone shape with a slanted side surface such that the crosssectional area decreases toward the powder discharge portion 31b from the powder input portion 31a, or the like can be given. In addition, the material of the powder holding portion 30 is not particularly limited, and a material having strength for storing the powder P and capable of restraining an inflow of the outside air is preferable. For example, a functional sheet having a nonmetal such as plastic or cloth as a base material may be used in addition to metal such as steel.

The means for introducing the powder P into the powder holding portion 30 of the powder supply section 3 is not particularly limited. For example, a pipe connecting a container for storing the powder P from an upper part on the powder input portion 31a side is provided and the powder P is continuously introduced, or the powder P is directly introduced into the powder input portion 31a in a batch manner. As the powder supply section 3 in the present embodiment, as shown in Fig. 1, the powder supply section 3 includes a powder supply feeder 34 that can control the powder supply amount via a rotation of a screw.

In addition, the powder input portion 31a and the powder discharge portion 31b of the powder holding portion 30 may be provided with a configuration that allows the powder holding portion 30 to be sealed. In this way, it is possible to appropriately handle powder that is deteriorated (moistened) due to contact with the atmosphere. As such a configuration, as shown in Fig. 1, a configuration in which the powder input portion 31a and the powder discharge portion 31b are provided with lid portions 35a and 35b, respectively, and the lid portions 35a and 35b are provided with sealing means 36. As an example of the sealing means 36, sealing means using a packing, sealing means that performs fixation by using bolts or clamps, or the like can be given. In this case, a configuration capable of performing sealing between the powder supply feeder 34 and the powder input portion 31a is also provided.

### <Detection Means>

The detection means 4 is means for identifying a powder supply status to the stirring and mixing section 2. As an example of the detection means 4, a device (sensor) capable of detecting a state or a numerical value related to a location associated with the powder supply status to the stirring and mixing section 2 can be used.

Here, the powder supply status is related to whether or not a predetermined amount of powder P is appropriately supplied from the powder supply section 3 to the stirring and mixing section 2, and also indicates a tendency of the occurrence of the preparation-related failure such as excessive viscosity or poor dispersion of the mixture M in the dispersion apparatus 1.

The detection result by the detection means 4 may directly indicate the powder supply status, or may indirectly indicate the powder supply status. The detection result (measurement value or the like) is input to the control unit 5 (a determination unit 51) to be described later.

### <Control Unit>

The control unit 5 controls the supply of the powder according to the powder supply status acquired by the means (detection means 4) for identifying the powder supply status described above.

Here, the control related to the supply of the powder in the control unit 5 is at least the supply (supply continuation), stop, and supply resumption of the powder, and in addition thereto, it is preferable to include the operation control of the dispersion apparatus 1 until the supply of the powder is resumed.

The control unit 5 also controls the mixing of the powder and the liquid in addition to the control of the supply of the powder, so that it is possible to normalize the operation related to the preparation of the mixture while the supply of the powder is stopped. In this way, the supply of the powder can be continued in a state where the influence of the occurrence of the preparation-related failure is more accurately avoided or eliminated, and the powder supply amount can be always optimized with higher accuracy. That is, the control unit 5 may include all the controls related to the operation of the dispersion apparatus 1, such as the control for securing the normal operation of the dispersion apparatus 1, the control for ensuring the accuracy of the supply amount of the powder and the liquid, and the control for performing an appropriate response when the preparation-related failure occurs.

The control unit 5 may include the determination unit 51 that determines the powder supply status from the detection result of the detection means 4 described above, and an operation control unit 52 that performs an operation for a location related to the powder supply in the dispersion apparatus 1, based on a determination result of the determination unit 51.

The determination unit 51 determines which of the supply (supply continuation), the stop, and the supply resumption of the powder is to be performed, based on the detection result of the detection means 4.

As an example of the determination in the determination unit 51, a determination that the powder is continuously supplied is made when the detection result (measurement value) is within a setting value (threshold) set for each of the detection means 4 (sensors), and a determination that the supply of the powder is stopped is made in a case where the detection result exceeds or falls below the setting value. In addition, a determination that the supply of the powder is resumed is made in a case where the detection result after the stop of the supply of the powder is within the setting value.

The determination result in the determination unit 51 is input to the operation control unit 52.

The operation control unit 52 is for performing an operation for a location related to the powder supply in the dispersion apparatus 1, based on the determination result of the determination unit 51.

As an example of the operation in the operation control unit 52, an operation of closing the shutter 33 or decelerating or stopping the powder input from the powder supply feeder 34 in a case where the determination result of the determination unit 51 is that the powder supply is stopped can be given. In addition, in a case where the determination result of the determination unit 51 is that the supply of the powder is resumed, an operation of opening the shutter 33 or performing the powder input from the powder supply feeder 34 at a normal speed is performed.

In addition, as another example related to the operation in the operation control unit 52, when the determination result of the determination unit 51 is the stop of the powder supply and the powder supply is not resumed, an operation related to the operation of the stirring mechanism 21 in the stirring and mixing section 2 (rotation of a motor or the like) is performed, or an operation related to the liquid supply operation (opening and closing of the valve 25, driving of the liquid supply pump 26, or the like) is performed. These operations correspond to normalizing the operation of the dispersion apparatus 1 related to the preparation of the mixture M.

In this way, the powder can be continuously supplied in a state where the influence of the occurrence of the preparation-related failure such as excessive viscosity or poor dispersion is more accurately avoided or eliminated, and the powder supply amount can be always optimized with higher accuracy.

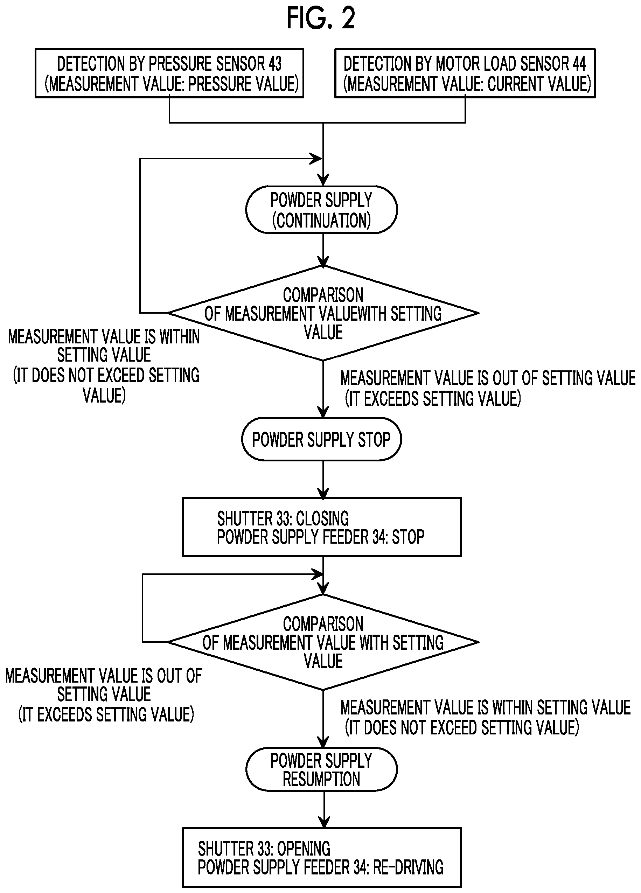

Hereinafter, sensors that are used as the detection means 4 in the present embodiment and the control contents of the control unit 5 based on the detection results of each sensor will be described with reference to specific examples. Fig. 2 is a diagram showing an example of a control flow by the control unit 5 in the dispersion apparatus 1 of the present embodiment.

A powder detection sensor 41 is for identifying the powder supply status in the powder holding portion 30, and is usually provided in a lower portion of the powder holding portion 30. The powder detection sensor 41 is for detecting whether or not the powder P is continuously discharged from the powder discharge portion 31b and is normally supplied to the stirring and mixing section 2, and a specific structure thereof is not limited. However, a structure in which the movement of the powder P is captured while a blade is rotated by a motor with a detection blade is preferably used.

As an example of the control of the control unit 5 based on the detection result of the powder detection sensor 41, a current value of the rotation of the blade of the powder detection sensor 41 is used as a measurement value, and the powder supply status is determined based on a setting value determined in advance. The content that is determined in this case corresponds to a determination of the accumulation status of the powder P in the powder holding portion 30, that is, the blockage status of the powder supply pipe 32. Then, in a case where it is determined that there is a possibility that the powder supply pipe 32 is blocked by the powder P, the supply of the powder is controlled by controlling the powder supply speed of the powder supply feeder 34 (the rotation speed of the screw). In addition, when it is determined that the blade of the powder detection sensor 41 is completely restrained and the blockage by the powder P occurs, a determination of stopping the powder supply is made, the powder supply feeder 34 is completely stopped, and control is performed with respect to another location related to the powder supply or the mixing of the powder and the liquid.

A powder input amount sensor 42 directly detects the amount of the powder P that is supplied to the powder input portion 31a, and the weight of the powder P serves as a measurement value. In addition, as the powder input amount sensor 42, any sensor may be used as long as it can measure the weight of the powder P, and a specific structure thereof is not limited. However, a load cell is preferably used.

As an example of the control of the control unit 5 based on the detection result of the powder input amount sensor 42, a powder weight corresponding to one batch that is input into the powder input portion 31a is set as a setting value, and when the measurement value approaches the setting value (for example, 90% of the setting value), the supply speed of the powder supply feeder 34 is controlled to be decelerated, and at the point in time when the measurement value reaches the setting value, a determination of stopping the supply of the powder is made, and the supply from the powder supply feeder 34 is completely stopped. At this time, in order to secure an accurate supply amount in the stirring and mixing section 2, the shutter 33 may be closed at the same time.

A pressure sensor 43 detects pressure corresponding to the internal pressure of the stirring and mixing section 2, and a known pressure gauge can be used. In addition, the detected pressure value serves as a measurement value. A location where the pressure sensor 43 is provided may be the inside of the stirring and mixing section 2. However, as shown in Fig. 1, the pressure sensor 43 may be provided on the powder supply pipe 32 between the shutter 33 and the stirring and mixing section 2.

As an example of the control of the control unit 5 based on the detection result of the pressure sensor 43, when the powder P is clogged and blocked somewhere from the powder supply section 3 to the stirring and mixing section **2,** the negative pressure increases. Therefore, when the measurement value reaches a value equal to or higher than the setting value, a determination of stopping the powder supply is made, the powder supply feeder 34 is stopped, and the shutter 33 is temporarily closed.

In addition, after the shutter 33 is closed, the stirring and mixing section 2 is driven to circulate the liquid L, and after a predetermined time has elapsed, in a case where the measurement value is equal to or lower than the setting value, it is determined that the operation related to the mixing of the powder and the liquid is normalized, and in this case, a determination of resuming the supply of the powder is made, the shutter 33 is opened, and the powder supply feeder 34 is re-driven to resume the supply of the powder.

In a case where the cavitation generation function is provided in the stirring and mixing section 2, the time until the supply of the powder P is resumed can be further shortened. More specifically, in a case where the powder supply becomes difficult, the powder supply is stopped, and the stirring and mixing section 2 is driven to perform dispersion by cavitation, so that the dispersion of the powder P can be promoted by the foaming of the cavitation. Since the viscosity of the slurry can be quickly lowered due to the dispersion promotion by the foaming, the supply of the powder P can be resumed at an early stage.

A motor load sensor 44 detects a current value of an inverter for a drive motor of the stirring and mixing section 2, and the current value serves as a measurement value. Normally, when the dispersion by the stirring and mixing section 2 progresses and the mixture M (slurry) is completed, the current value starts to decrease from the initial current value, and the current value becomes a value equal to or lower than the setting value, thereby completing the mixture M (slurry). On the other hand, when the viscosity of the mixture M rapidly increases due to the occurrence of some kind of failure in the preparation, an excessive current value is detected.

Therefore, as an example of the control of the control unit 5 based on the detection result of the motor load sensor 44, when a current value equal to or higher than the setting value is detected, a determination of stopping the powder supply is made, the powder supply feeder 34 is stopped, and the shutter 33 is closed. In addition, after the powder supply is stopped, when it is determined that the measurement value of the motor load sensor 44 falls below the setting value and the operation related to the mixing of the powder and the liquid is normalized, a determination of resuming the supply of the powder is made, the shutter 33 is opened, and the powder supply feeder 34 is re-driven to resume the supply of the powder.

In a case where the cavitation generation function is provided in the stirring and mixing section 2, the time until the supply of the powder P is resumed can be further shortened. More specifically, in a case where the powder supply becomes difficult, the powder supply is stopped, and the stirring and mixing section 2 is driven to perform dispersion by cavitation, so that the dispersion of the powder P can be promoted by the foaming of the cavitation. Since the viscosity of the slurry can be quickly lowered due to the dispersion promotion by the foaming, the supply of the powder P can be resumed at an early stage.

A slurry circulation flow rate sensor 45 detects a flow rate of the liquid L (slurry of the mixture M) circulating through the liquid supply pipe 23, and the detected circulation flow rate serves as a measurement value. A specific structure related to the flow rate detection is not limited. However, an electromagnetic type flowmeter is preferably used.

As an example of the control of the control unit 5 based on the detection result of the slurry circulation flow rate sensor 45, in a case where a time during which the circulation flow rate decreases to a value equal to or lower than the setting value (initial value) (for example, equal to or lower than 50% of the setting value (initial value)) continues for a predetermined time or more, there is a possibility that a failure occurs due to an increase in viscosity. Therefore, a determination of stopping the supply of the powder is made, and the shutter 33 is closed. In addition, in a case where the measurement value of the slurry circulation flow rate sensor 45 approaches the setting value (initial value) (for example, a decrease amount from the setting value (initial value) is 20% or less) after the circulation of the liquid L (slurry) in the liquid supply pipe 23 is continued for a predetermined time, it is determined that the operation related to the mixing of the powder and the liquid is normalized, and a determination of resuming the supply of the powder is made. In this case, the shutter 33 is opened, and the powder supply feeder 34 is re-driven to resume the supply of the powder.

In a case where the cavitation generation function is provided in the stirring and mixing section 2, the time until the supply of the powder P is resumed can be further shortened. More specifically, in a case where the powder supply becomes difficult, the powder supply is stopped, and the stirring and mixing section 2 is driven to perform dispersion by cavitation, so that the dispersion of the powder P can be promoted by the foaming of the cavitation. Since the viscosity of the slurry can be quickly lowered due to the dispersion promotion by the foaming, the supply of the powder P can be resumed at an early stage.

Further, in addition to the detection means 4 in the present embodiment, information acquisition means 6 for identifying a situation related to the operation (mixing of the powder P and the liquid L) of the dispersion apparatus 1 is provided, and the control by the control unit 5 may be performed based on the acquired information.

As the information acquisition means 6, any means may be used as long as it can acquire information such as a state or a numerical value related to the mixing of the powder P and the liquid L, and various sensors may be used as with the detection means 4.

Hereinafter, sensors that are used as the information acquisition means 6 in the present embodiment, and the control content by the control unit 5 based on information acquired by each sensor will be described with reference to specific examples.

A liquid input amount sensor 61 acquires (measures) information related to the amount of the liquid L that is supplied to the storage tank 22 for the liquid L in order to secure the accuracy of the supply amount of the liquid L that is introduced into the stirring and mixing section 2, and a specific structure thereof is not limited as long as the flow rate of the liquid can be measured. However, a Coriolis flowmeter is preferably used.

In this case, as an example of the control by the control unit 5, the amount of the liquid corresponding to one batch that is introduced from the storage tank 22 for the liquid L is set as a defined value, when the measured amount of the liquid L approaches a defined amount (for example, 90% of the defined value), the speed of the liquid supply pump 26 is controlled to be decelerated, and at the point in time when the measured amount of the liquid L reaches the defined value, the liquid supply pump 26 is stopped and the valve 25 is closed in order to secure an accurate supply amount to the stirring and mixing section 2.

A slurry temperature sensor 62 acquires (measures) information related to the slurry temperature of the mixture M circulating through the liquid supply pipe 23, and an inline thermometer that is installed on the liquid supply pipe 23 returning from the stirring and mixing section 2 to the storage tank 22 for the liquid L is preferably used. As the slurry temperature sensor 62, a specific structure thereof is not limited as long as the temperature can be measured in an inline manner. However, usually, a resistance temperature detector is preferably used.

In this case, as an example of the control by the control unit 5, in a case where the measured slurry temperature is equal to or higher than a defined temperature, the rotation speed of the drive motor of the stirring and mixing section 2 is reduced, and the drive motor is rotated at a low speed until the measured slurry temperature becomes equal to or lower than a defined value. Then, when the measured slurry temperature is equal to or lower than the defined value, the drive motor of the stirring and mixing section 2 is returned to the original rotation speed.

With respect to the detection by the detection means 4 and the control by the control unit 5 described above, at least one of them may be implemented, and it is more preferable to implement all the exemplified items. In addition, the information acquisition by the information acquisition means 6 and the control by the control unit 5 described above can be omitted. However, it is preferable to implement at least one of them, and it is more preferable to implement all the exemplified items.

In addition, as described above, the control unit 5 performs a necessary determination and operation, based on a setting value (or a defined value) set in advance as a determination reference, and various measurement values fed back from the respective detection means 4 and the information acquisition means 6. All the determinations and operations in the control unit 5 can be determined and manually performed by a worker. However, it is preferable to use a calculation device that executes a program related to the above-described determination and operation by a processor such as a CPU to enable automatic control, thereby improving productivity and reducing costs.

The embodiment described above is an example of the dispersion apparatus and the dispersion method of the present invention. The dispersion apparatus and the dispersion method according to the present invention are not limited to the embodiment described above, and the dispersion apparatus and the dispersion method according to the embodiment described above may be modified within a scope which does not change the concepts described in the claims.

### Industrial Applicability

The dispersion apparatus and the dispersion method of the present invention are preferably used for preparing a mixture (slurry) by mixing of powder and a liquid, and are particularly preferably used in mass production of the mixture.

In addition, the dispersion apparatus and the dispersion method of the present invention can ensure the uniformity and high quality of a high concentration, high viscosity, and difficult-to-disperse slurry, and can be used in a wide range of fields such as lithium ion battery electrode materials, coating materials, nano-fiber dispersion composite materials, cosmetics such as emulsions, pharmaceuticals such as ointments, and foods.

### Reference Signs List

- 1: dispersion apparatus
- 2: stirring and mixing section
- 20: mixing chamber
- 21: stirring mechanism
- 22: storage tank
- 23: liquid supply pipe
- 24: discharge pipe
- 25: valve
- 26: liquid supply pump
- 3: powder supply section
- 30: powder holding portion
- 31a: powder input portion
- 31b: powder discharge portion
- 32: powder supply pipe
- 33: shutter
- 34: powder supply feeder
- 35a, 35b: lid portion
- 36: sealing means
- 4: detection means
- 41: powder detection sensor
- 42: powder input amount sensor
- 43: pressure sensor
- 44: motor load sensor
- 45: slurry circulation flow rate sensor
- 5: control unit
- 51: determination unit
- 52: operation control unit
- 6: information acquisition means
- 61: liquid input amount sensor
- 62: slurry temperature sensor
- L: liquid
- M: mixture
- P: powder

## Claims

1. A dispersion apparatus for producing slurry for a battery, the dispersion apparatus comprising:
a stirring and mixing section that mixes powder and a liquid;
means for identifying a powder supply status to the stirring and mixing section; and
a control unit that controls supply of the powder according to the powder supply status.

2. The dispersion apparatus according to claim 1,
wherein the control unit performs an operation related to mixing of the powder and the liquid until the supply is resumed, in addition to operations for supply, stop, and supply resumption of the powder.

3. The dispersion apparatus according to claim 1 or 2, further comprising:
a powder detection sensor as the means for identifying the powder supply status,
wherein in a case where it is determined that there is a possibility that a powder supply pipe is blocked based on a detection result of the powder detection sensor, the control unit controls a powder supply speed of a powder supply feeder.

4. The dispersion apparatus according to claim 1 or 2,
wherein an inside of the stirring and mixing section is at a negative pressure.

5. A dispersion method for producing slurry for a battery, the dispersion method comprising:
a stirring and mixing process of mixing powder and a liquid;
a process of identifying a powder supply status in the stirring and mixing process; and
a control process of controlling supply of the powder according to the powder supply status.
